# EUROPÄISCHE PATENTSCHRIFT

(11) **EP 3 491 263 B1**
(45) Veröffentlichungstag und Bekanntmachung des Hinweises auf die Patenterteilung: **23.06.2021**
(21) Anmeldenummer: 17727188.9
(22) Anmeldetag: 29.05.2017
(51) Int. Cl.: F16D 48/06, F16D 48/02

(54) **SYNCHRONPUNKT-ERMITTLUNGSVERFAHREN UND KRAFTFAHRZEUGGETRIEBE**
SYNCHRONOUS POINT-DETERMINING METHOD AND MOTOR VEHICLE TRANSMISSION
PROCÉDÉ DE DÉTERMINATION DU POINT DE SYNCHRONISATION ET BOÎTE DE VITESSE DE VÉHICULE AUTOMOBILE

(30) Priorität: 29.07.2016 DE 102016114105
(43) Veröffentlichungstag der Anmeldung: 05.06.2019
(73) Patentinhaber: Magna PT B.V. & Co. KG, 74199 Untergruppenbach (DE)
(72) Erfinder: KNOEPFLE, Phillipp, 71636 Ludwigsburg (DE)
(74) Vertreter: Rausch, Gabriele
(86) Internationale Anmeldenummer: PCT/EP2017/062897
(87) Internationale Veröffentlichungsnummer: WO 2018/019450

(56) Entgegenhaltungen:
- DE-A1- 10 308 517
- DE-A1-102008 043 385
- DE-A1-102010 035 776
- DE-A1-102013 211 927
- US-A1- 2010 113 217
- US-A1- 2014 229 044

## Beschreibung

Die vorliegende Erfindung betrifft ein Verfahren zum Ermitteln eines Synchronpunktes einer Synchron-Schaltkupplung eines Kraftfahrzeuggetriebes, das eingangsseitig mit einer elektrischen Maschine verbunden ist und das eine Mehrzahl von Synchron-Schaltkupplungen beinhaltet, die jeweils ein mit der elektrischen Maschine verbundenes Antriebsglied und ein mit einer Ausgangswelle verbundenes Abtriebsglied aufweisen und die mittels eines zugeordneten Schaltkupplungsaktuators aus einer Öffnungsposition in eine Schließposition betätigbar sind.

Ferner betrifft die vorliegende Erfindung ein Kraftfahrzeuggetriebe mit einer Eingangswelle, mit einer Mehrzahl von Radsätzen, denen eine Mehrzahl von Synchron-Schaltkupplungen zugeordnet ist, mit einer Ausgangswelle, mit einer elektrischen Maschine, die mit der Eingangswelle verbunden ist, wobei die Synchron-Schaltkupplungen jeweils ein mit der Eingangswelle verbundenes Antriebsglied und ein mit der Ausgangswelle verbundenes Abtriebsglied aufweisen und wobei die Synchron-Schaltkupplungen mittels wenigstens einem zugeordneten Schaltkupplungsaktuator aus einer Öffnungsposition in eine Schließposition betätigbar sind, und mit einer Steuereinrichtung zur Ansteuerung der elektrischen Maschine und des Schaltkupplungsaktuators.

Ein Kraftfahrzeuggetriebe des oben beschriebenen Typs ist insbesondere in einem Hybrid-Antriebsstrang verwendbar. Hierbei ist eine Eingangswelle des Kraftfahrzeuggetriebes in der Regel über eine Kupplungsanordnung mit einem Verbrennungsmotor verbunden. Das Kraftfahrzeuggetriebe kann in diesem Fall als herkömmliches Stufengetriebe zur Verwendung mit dem Verbrennungsmotor eingesetzt werden. In einem solchen Antriebsstrang ist jedoch bspw. auch ein rein elektrischer Betriebsmodus möglich, wobei die zwischen der Eingangswelle und dem Verbrennungsmotor angeordnete Reibkupplung geöffnet wird und die elektrische Maschine die Eingangswelle antreibt, so dass dann über die Mehrzahl von Radsätzen unterschiedliche Gangstufen im rein elektrischen Fahrbetrieb einrichtbar sind.

Bei Antriebssträngen, die ein Doppelkupplungsgetriebe aufweisen, ist es bevorzugt, wenn eine solche elektrische Maschine mit der Eingangswelle von einem der Teilgetriebe verbunden ist. In diesem Fall kann ein rein elektrischer Fahrbetrieb über jenes Teilgetriebe eingerichtet werden.

Während in einem verbrennungsmotorischen Betrieb eines solchen Hybrid-Antriebstranges mit Doppelkupplungsgetriebe Gangstufenwechsel ohne Zugkraftunterbrechung realisierbar sind, indem das Antriebsmoment zugkraftunterbrechungsfrei von einem Teilgetriebe auf das andere Teilgetriebe übergeben wird, erfolgen Gangwechsel im rein elektromotorischen Betrieb in der Regel mit Zugkraftunterbrechung. Denn in diesem Fall ist bei einem Gangwechsel eine Quellgangstufe in dem mit der elektrischen Maschine verbundenen Teilgetriebe auszulegen, das Drehmoment der elektrischen Maschine ist auf Null abzusenken, und anschließend ist eine Zielgangstufe in dem gleichen Teilgetriebe einzulegen, woraufhin dann die elektrische Maschine darauffolgend wieder elektrisches Antriebsmoment bereitstellen kann.

Das Ein- und Auslegen von Gangstufen erfolgt dabei über Synchron-Schaltkupplungen. Hierbei handelt es sich um Kupplungen, die vorzugsweise einen Formschluss in Drehrichtung herstellen können, jedoch auch für eine Drehzahlsynchronisierung zwischen Antriebsglied und Abtriebsglied sorgen können. Zu diesem Zweck weisen derartige Synchron-Schaltkupplungen in der Regel einen oder mehrere Reibkegel auf.

Ein Antriebsglied einer solchen Synchron-Schaltkupplung kann bspw. durch eine Welle gebildet sein und eine damit verbundene Führungsmuffe, an der bspw. eine Schaltmuffe axial verschiebbar ist. Ein Abtriebsglied einer solchen Synchron-Schaltkupplung kann bspw. ein Kupplungskörper sein, der fest mit einem Losrad verbunden ist, das drehbar an dieser Welle gelagert ist. An einem Innenumfang der Schaltmuffe kann eine Axialverzahnung ausgebildet sein, und an dem Kupplungskörper sowie an der Führungsmuffe können außen entsprechende Axialverzahnungen ausgebildet sein, so dass ein Formschluss dadurch eingerichtet wird, dass die Schaltmuffenverzahnung sowohl in die Verzahnung des Kupplungskörpers als auch in die Verzahnung der Führungsmuffe greift.

In modernen Antriebssträngen, insbesondere in Hybrid-Antriebsträngen werden derartige Synchron-Schaltkupplungen in der Regel automatisiert betätigt, bspw. durch Fluidaktuatoren, durch elektrische Schaltwalzenantriebe, etc.

Eine Synchron-Schaltkupplung weist einen sog. Synchronpunkt auf, bei dem die Synchron-Schaltkupplung aufgrund eines Reibeingriffes ihrer Reibkegel dazu in der Lage ist, ein bestimmtes Drehmoment zu übertragen. Der Synchronpunkt ergibt sich in der Regel dadurch, dass die Reibkegel bei der Betätigung der Synchron-Schaltkupplung aneinander anliegen und ein bestimmtes Reibmoment aufbauen.

Insbesondere dann, wenn in einem automatisierten Kraftfahrzeuggetriebe Gangwechsel mit Zugkraftunterbrechung durchgeführt werden, kommt es auf eine möglichst schnelle Betätigung derartiger Synchron-Schaltkupplungen an. Ferner hängt eine optimale Betätigung solcher Synchron-Schaltkupplungen mittels eines Schaltkupplungsaktuators ebenfalls davon ab, dass der Aktuator schnell und gezielt hin zu einem Synchronpunkt angefahren werden kann, was bspw. durch eine Wegsteuerung erfolgen kann, wohingegen das Andrücken der Reibkegel zum Zwecke der Synchronisierung vorzugsweise über eine Kraftsteuerung erfolgt. Andere Ansteuerungsarten sind natürlich ebenfalls möglich.

Aus dem Dokument DE 10 2008 043 385 A1 ist ein Verfahren zur Synchronpunktermittlung eines automatisierten Doppelkupplungsgetriebes bekannt. Hierbei wird ein aktueller Synchronpunkt eines Gangstellers bei laufendem Verbrennungsmotor durch Anfahren der Synchronisierung und durch Erfassen einer signifikanten Änderung von mindestens einem relevanten Betriebsparameter ermittelt. Hierbei wird der Gangsteller sukzessive in Richtung der Schaltposition verstellt, bis an der zugeordneten Gangkupplung ein Synchronlauf innerhalb einer applizierbaren Schwelle erreicht ist. Ein aktueller Synchronpunkt wird aus dem aktuellen Stellparameter des zugeordneten Gangstellers ermittelt. Schließlich wird der gültige Synchronpunkt der Gangkupplung mit dem aktuellen Synchronpunkt adaptiert.

Die Synchronpunktermittlung kann bei diesem Verfahren im Fahrzeugstillstand erfolgen oder während der Fahrt in einem momentan lastfreien Teilgetriebe des Doppelkupplungsgetriebes. Insbesondere wird vor der Ermittlung eines aktuellen Synchronpunktes überprüft, ob an der betreffenden Gangkupplung eine applizierbare Mindestdrehzahldifferenz vorliegt, wobei die zugeordnete Reibkupplung nur bei Vorliegen einer geringeren Drehzahldifferenz an der Gangkupplung zur Einstellung der Mindestdrehzahldifferenz teilweise eingerückt und wieder vollständig ausgerückt wird.

Generell wird bei diesem Verfahren darauf abgestellt, dass zu den oben genannten Zwecken an der Gangkupplung ein Synchronlauf hergestellt wird. Mit anderen Worten wird der aktuelle Synchronpunkt durch Erkennung des Synchronlaufes an der Gangkupplung erkannt.

Aus dem Dokument DE 10 2010 028 936 A1 ist ein Verfahren zum Betreiben eines Antriebstranges eines Kraftfahrzeuges mit einem zumindest eine elektrische Maschine und einen Verbrennungsmotor umfassenden Antriebsaggregat bekannt, wobei zwischen den Verbrennungsmotor und einen Abtrieb ein automatisiertes Schaltgetriebe geschaltet ist, wobei die elektrische Maschine über eine Reibkupplung an eine Welle des automatisierten Schaltgetriebes gekoppelt ist und wobei in dem automatisierten Schaltgetriebe, unter Unterbrechung des vom Antriebsaggregat an dem Abtrieb bereit gestellten Antriebsmomentes, Schaltungen derart ausgeführt werden, dass zunächst in einer ersten Phase das am Abtrieb bereit gestellte Antriebsmoment abgebaut wird, anschließend in einer zweiten Phase nach Abbau des Antriebsmomentes die eigentliche Schaltung ausgeführt wird und darauffolgend in einer dritten Phase nach Ausführung der eigentlichen Schaltung am Abtrieb Antriebsmoment wieder aufgebaut wird. Dabei soll zum Ausführen der eigentlichen Schaltung nach einem Gangauslegen eines Ist-Gangs der Schaltung und vor einem Gangeinlegen eines Ziel-Gangs der Schaltung die Welle des automatisierten Schaltgetriebes, an die die elektrische Maschine über die Reibkupplung gekoppelt ist, unter Ausnutzen einer Schwungmasse der elektrischen Maschine synchronisiert werden.

Aus dem Dokument EP 2 212 578 B1 ist ein Verfahren zum Einstellen eines Einrückpunktes einer Reibkupplung eines Stufengetriebes für ein Kraftfahrzeug bekannt, insbesondere einer Lamellen-Reibkupplung eines Doppelkupplungsgetriebes, wobei die Reibkupplung mittels eines Kupplungsaktuators gesteuert betätigbar ist, wobei wenigstens eine Synchron-Schaltkupplung zum Ein- und Auslegen einer Gangstufe des Stufengetriebes mittels eines Schaltaktuators gesteuert betätigbar ist, wobei ein Soll-Wert des Kupplungsaktuators für den Einrückpunkt der Reibkupplung in Abhängigkeit von einem Drehzahlgradientwert eingestellt wird, der sich ausgehend von einem Übergangszustand mit betätigter Reibkupplung und betätigter Schaltkupplung ergibt, nachdem die Schaltkupplung geöffnet wird. Dabei soll der Übergangszustand hergestellt werden, indem der Kupplungsaktuator und der Schaltaktuator im Wesentlichen gleichzeitig auf einen jeweiligen Übergangswert eingestellt werden.

Aus dem Dokument WO 2015/086013 A2 ist ein Verfahren zum Bestimmen eines Tastpunktes einer Reibkupplung an einem Getriebe bekannt, wobei die Reibkupplung zur Verbindung einer Eingangswelle mit einer Getriebewelle dient und wobei eine elektrische Maschine mit der Getriebewelle verbunden ist. Das Tastpunkt-Bestimmungsverfahren beinhaltet, nach Aufheben einer drehmomentschlüssigen Kopplung eines Gangradpaars mit der Getriebewelle oder einer Ausgangswelle einen ersten Drehzahlgradienten der Getriebewelle in einer ersten Phase zu bestimmen. Anschließend soll die Reibkupplung teilweise geschlossen werden, wobei dann ein zweiter Drehzahlgradient der Getriebewelle in einer zweiten Phase bestimmt wird. Der Tastpunkt der Reibkupplung soll auf der Basis der beiden Gradienten bestimmt werden. Die elektrische Maschine soll während beider Phasen dazu angesteuert werden, ein vorbestimmtes Drehmoment an die Getriebewelle abzugeben.

Aus der DE 10 2010 035 776 A1 ist ein Verfahren zur Ansteuerung eines Antriebsstrangs bekannt, der eine elektrische Maschine zur Bereitstellung von Antriebsleitung und ein Stufengetriebe mit einer Mehrzahl von Gangstufen aufweist, die mittels jeweiliger Synchron-Schaltkupplungen ein- und auslegbar sind, wobei die elektrische Maschine mit einem Eingang des Stufengetriebes verbunden oder mittels einer Koppeleinrichtung verbindbar ist und wobei zur Durchführung eines Gangwechsels eine Synchronisierung von Drehzahlen an einer Synchron-Schaltkupplung einer Zielgangstufe erfolgt.

US 2010/ 113 217 A1 betrifft ein Verfahren zur Synchronpunktermittlung eines automatisierten Doppelkupplungsgetriebes, das zwei Teilgetriebe mit jeweils einer über eine Reibungskupplung mit der Triebwelle eines Antriebsmotors verbindbaren Eingangswelle und mehrere über jeweils eine reibsynchronisierte Gangkupplung schaltbare Gänge umfasst, wobei bei laufendem Antriebsmotor durch das Anfahren der Synchronisierung einer Gangkupplung und die Erfassung einer signifikanten Änderung mindestens eines relevanten Betriebsparameters ein aktueller Wert des Synchronpunktes des zugeordneten Gangstellers ermittelt wird.

Vor dem obigen Hintergrund ist es eine Aufgabe der Erfindung, ein verbessertes Verfahren zum Ermitteln eines Synchronpunktes einer Synchron-Schaltkupplung eines Kraftfahrzeuggetriebes sowie ein verbessertes Kraftfahrzeuggetriebe anzugeben, wobei insbesondere dann, wenn an das Kraftfahrzeuggetriebe eine elektrische Maschine angeschlossen ist, eine exakte Einstellung des Synchronpunktes möglich ist.

Die obige Aufgabe wird gemäß einem ersten Aspekt der Erfindung gelöst durch ein Verfahren zum Ermitteln und eines Synchronpunktes einer Synchron-Schaltkupplung eines Kraftfahrzeuggetriebes, gemäß dem Anspruch 1.

Bei dem ersten Aspekt der Erfindung ist es möglich, den Synchronpunkt auch dann exakt einzustellen, wenn an den Eingang des Kraftfahrzeuggetriebes eine elektrische Maschine angeschlossen ist, und zwar insbesondere auf drehfeste Art und Weise. Denn die Ermittlung des Synchronpunktes kann hierbei durch die angeschlossene elektrische Maschine bzw. deren Massenträgkeit ansonsten beeinträchtigt werden. Zudem kann die Trägheit der elektrischen Maschine abhängig von Drehzahl und Feldschwächungsbereich sein.

Bei dem erfindungsgemäßen ersten Aspekt wird hingegen die Antriebsdrehzahl des Antriebsgliedes, das mit der elektrischen Maschine verbunden ist, auf eine Synchronpunktermittlungsdrehzahl geregelt, so dass derartige Massenträgheiten regelungstechnisch ausgeglichen werden.

Das Ermitteln des Synchronpunktes erfolgt dann dadurch, dass bei einem allmählichen Betätigen der Synchron-Schaltkupplung mittels des Schaltkupplungsaktuators zu einem bestimmten Zeitpunkt ein Reibmoment in der Synchron-Schaltkupplung aufgebaut wird, was als Widerstandsmoment erfahren wird und den Synchronpunkt identifiziert. Durch das Reibmoment ist es aufgrund der geregelten Synchronpunktermittlungsdrehzahl notwendig, einen Betriebsparameter zu ändern. Diese Änderung des Betriebsparameters kann dann erfasst werden, um auf diese Weise den Synchronpunkt zu ermitteln.

Wie eingangs erläutert, dienen die Synchron-Schaltkupplungen des Kraftfahrzeuggetriebes vorzugsweise zum Ein- und Auslegen von Gangstufen des Kraftfahrzeuggetriebes. Die elektrische Maschine ist eingangsseitig mit dem Kraftfahrzeuggetriebe und mit dem Antriebsglied einer Synchron-Schaltkupplung verbunden. Unter einer Verbindung der elektrischen Maschine mit einem anderen Element des Kraftfahrzeuggetriebes wird vorzugsweise verstanden, dass die Verbindung nach der Art einer Drehzwangskopplung erfolgt, so dass dann, wenn die elektrische Maschine in Rotation versetzt wird, auch das damit verbundene Glied in Rotation versetzt wird, also auch dann, wenn eine Übersetzungseinrichtung zum Einstellen unterschiedlicher Drehzahlen dazwischen angeordnet ist.

Vorzugsweise sind die Synchron-Schaltkupplungen in Schaltkupplungspaketen angeordnet, die jeweils mittels eines Schaltkupplungsaktuators betätigt werden. Der Schaltkupplungsaktuator kann ein fluidischer Aktuator sein, wie ein Hydraulikaktuator, kann jedoch auch ein elektromechanischer Aktuator sein, wie ein Schaltwalzenaktuator.

Das erfindungsgemäße Ermittlungsverfahren geht vorzugsweise davon aus, dass sich sämtliche Synchron-Schaltkupplungen des Kraftfahrzeuggetriebes in einer Öffnungsposition befinden, und/oder davon, dass eine eingangsseitige Reibkupplungsanordnung geöffnet ist.

Das Regeln der Antriebsdrehzahl des Antriebsgliedes auf die Synchronpunktermittlungsdrehzahl ist vorliegend gleichzusetzen mit einem Regeln einer Drehzahldifferenz zwischen der Antriebsdrehzahl und der Abtriebsdrehzahl, oder gleichzusetzen mit dem Regeln eines proportionalen Wertes hierzu.

Das erfindungsgemäße Ermittlungsverfahren erfolgt vorzugsweise unter der Annahme, dass eine Abtriebsdrehzahl konstant ist. Diese kann jedoch auch variabel sein.

Die Überwachung des Betriebsparameters erfolgt so, dass dieser während der Regelung der Antriebsdrehzahl auf die Synchronpunktermittlungsdrehzahl daraufhin überwacht wird, ob sich der Wert ändert oder soweit ändert, dass er einen vorbestimmten Schwellenwert bzw. Betriebsparametervergleichswert überschreitet. Alternativ oder zusätzlich ist es auch möglich, den Betriebsparameter hinsichtlich seiner dynamischen Veränderung zu überwachen, also bspw. durch Überwachung eines Gradienten des Betriebsparameters bzw. durch Überwachung von dessen erster oder zweiter Ableitung.

Insgesamt kann das Synchronpunkt-Ermittlungsverfahren gemäß dem ersten Aspekt dazu verwendet werden, um einen Synchronpunkt-Einstellwert eines Ansteuerungsprogrammes zum Ansteuern des Schaltkupplungsaktuators zu aktualisieren. Dies kann bei jedem Schaltvorgang erfolgen, erfolgt jedoch vorzugsweise nicht bei jedem Schaltvorgang sondern in vorbestimmten Abständen und/oder bei einer Wartung.

Insgesamt kann sich hierdurch ein verringerter Verschleiß der Synchron-Schaltkupplung ergeben, und zwar aufgrund eines exakten Wissens des Synchronpunktes. Ferner können sich insbesondere schnellere Schaltzeiten ergeben, was insbesondere dann vorteilhaft ist, wenn Schaltungen durchgeführt werden, die nicht zugkraftunterbrechungsfrei sind.

Auch kann sich ein verbesserter Komfort aufgrund eines verringerten NVH-Verhaltens ergeben, da der Synchronpunkt definiert ist. Folglich wird kein undefinierter Zustand erzeugt.

Durch die erfindungsgemäße Maßnahme, die Synchronpunktermittlungsdrehzahl auf einen Wert einzuregeln, der ungleich der Abtriebsdrehzahl ist, kann verhindert werden, dass die Synchron-Schaltkupplung während des Synchronpunkt-Ermittlungsverfahrens durchschaltet und ein Formschluss hergestellt wird. Vielmehr ermöglicht die gezielte Drehzahlungleichheit, dass beim Erreichen des Synchronpunktes ein Widerstandsmoment in Form eines Reibmomentes aufgebaut wird, das dann zu einer Veränderung eines Betriebsparameters führt. Diese Veränderung des Betriebsparameters kann dann erfasst werden, um den Synchronpunkt festzustellen.

Die Synchronpunktermittlungsdrehzahl wird folglich vorzugsweise so gewählt, dass sie sich von der Abtriebsdrehzahl so unterscheidet, dass bei einem Ansteuern des Schaltkupplungsaktuators in Richtung der Schließposition ein Durchschalten und Herstellen eines Formschlusses in der Synchron-Schaltkupplung verhindert werden kann.

Die Aufgabe wird somit vollkommen gelöst.

Erfindungsgemäß ist es, wenn ein Betriebsparameter, der zur Ermittlung des Synchronpunktes überwacht wird, das von der elektrischen Maschine bereit gestellte Drehmoment ist.

Da die Antriebsdrehzahl auf eine Synchronpunktermittlungsdrehzahl geregelt wird, ist diese Ausführungsform insbesondere dann vorteilhaft, wenn diese Regelung durch die elektrische Maschine erfolgt. Dann, wenn der Synchronpunkt erreicht wird und sich ein Reibmoment als Widerstandsmoment in der Synchron-Schaltkupplung aufbaut, muss die elektrische Maschine zur Regelung der Synchronpunktermittlungsdrehzahl das Drehmoment erhöhen. Diese Erhöhung bzw. der Zeitpunkt dieser Erhöhung kann dann dazu verwendet werden, um den Synchronpunkt festzustellen.

Erfindungsgemäß ist in einer Ausführungsform i ein Betriebsparameter, der zur Ermittlung des Synchronpunktes überwacht wird, eine von dem Schaltkupplungsaktuator aufgenommene Leistung.

Da der Schaltkupplungsaktuator bei dem erfindungsgemäßen Verfahren angesteuert wird, um die Synchron-Schaltkupplung aus der Öffnungsposition in Richtung der Schließposition zu betätigen, erfährt die Ansteuerung des Schaltkupplungsaktuators ebenfalls das sich aufgrund eines Anlegens der Reibkonusse ergebende Widerstandsmoment, was zu einer Erhöhung der von dem Schaltkupplungsaktuator aufgenommenen Leistung führt. Diese Leistungsänderung bzw. der Zeitpunkt des Auftretens der Leistungsänderung kann dann dazu verwendet werden, um den Synchronpunkt festzustellen.

Insgesamt ist es ferner vorteilhaft, wenn der Schritt des Ansteuerns des Schaltkupplungsaktuators zur Betätigung der Synchron-Schaltkupplung eingeleitet wird, sobald die Regelung der Synchronpunktermittlungsdrehzahl eingeschwungen ist.

Hierdurch kann die Genauigkeit der Synchronpunktermittlung erhöht werden.

In einer Variante ist es bevorzugt, wenn die Abtriebsdrehzahl gleich Null ist.

Bei dieser Ausführungsform wird das erfindungsgemäße Ermittlungsverfahren durchgeführt, während ein Fahrzeug, in dem das Kraftfahrzeuggetriebe eingebaut ist, steht.

In einer alternativen Ausführungsform ist die Abtriebsdrehzahl ungleich Null.

Bei dieser Ausführungsform hat ein Fahrzeug, in das das Kraftfahrzeuggetriebe eingebaut ist, eine Geschwindigkeit größer Null. Das Ermittlungsverfahren kann dann vorzugsweise durchgeführt werden, wenn die Fahrzeuggeschwindigkeit größer ist als ein Mindestwert, der ungleich Null ist. Ferner wird das Ermittlungsverfahren vorzugsweise dann durchgeführt, wenn das Fahrzeug mit einer im Wesentlichen konstanten Geschwindigkeit oder mit einer Geschwindigkeit innerhalb eines bestimmten Geschwindigkeitsbandes fährt, und zwar vorzugsweise für eine vorbestimmte Zeitspanne.

Insgesamt ist es ferner vorteilhaft, wenn die Antriebsdrehzahl in Abhängigkeit davon, ob sich das Kraftfahrzeuggetriebe in einem Zugbetrieb oder in einem Schubbetrieb befindet, auf eine Synchronpunktermittlungsdrehzahl größer oder kleiner als die Abtriebsdrehzahl geregelt wird.

Die Entscheidung, ob die Synchronpunktermittlungsdrehzahl größer ist oder kleiner ist als die Abtriebsdrehzahl erfolgt in Abhängigkeit davon, ob sich das Fahrzeuggetriebe in einem Zugbetrieb oder in einem Schubbetrieb befindet. Hierdurch kann ein Umschlagen von Flanken eines Zahneingriffs eines Radsatzes verhindert werden, so dass NVH-Auswirkungen (Geräuschentwicklungen) vermieden oder zumindest verringert werden können.

Gemäß einer weiteren insgesamt bevorzugten Ausführungsform liegt eine aufgrund der Regelung der Antriebsdrehzahl auf die Synchronpunktermittlungsdrehzahl eingerichtete Drehzahldifferenz zwischen der Synchronpunktermittlungsdrehzahl und der Abtriebsdrehzahl in einem Bereich von 50 U/min bis 500 U/min, insbesondere in einem Bereich von 150 U/min bis 350 U/min, vorzugsweise in einem Bereich von 200 U/min bis 300 U/min.

Wie oben erwähnt, ist es bevorzugt, wenn die Antriebsdrehzahl mittels der elektrischen Maschine geregelt wird.

Ferner wird die obige Aufgabe gelöst durch ein Kraftfahrzeuggetriebe mit einer Eingangswelle, mit einer Mehrzahl von Radsätzen, denen eine Mehrzahl von Synchron-Schaltkupplungen zugeordnet ist, mit einer Ausgangswelle, mit einer elektrischen Maschine, die mit der Eingangswelle verbunden ist, wobei die Synchron-Schaltkupplungen jeweils ein mit der Eingangswelle verbundenes Antriebsglied und ein mit der Ausgangswelle verbundenes Abtriebsglied aufweisen und wobei die Synchron-Schaltkupplungen mittels wenigstens einem zugeordneten Schaltkupplungsaktuator aus einer Öffnungsposition in eine Schließposition betätigbar sind, und mit einer Steuereinrichtung zur Ansteuerung der elektrischen Maschine und des Schaltkupplungsaktuators, wobei die Steuereinrichtung dazu ausgebildet und eingerichtet ist, um das erfindungsgemäßen Verfahren durchzuführen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
Fig. 1 eine schematische Darstellung eines erfindungsgemäßen Kraftfahrzeuggetriebes;
Fig. 2 ein schematisches Flussdiagramm einer Ausführungsform eines erfindungsgemäßen Synchronpunkt-Ermittlungsverfahrens;
Fig. 3 ein Zeitablaufdiagramm eines Gangwechsels in einem Teilgetriebe bei rein elektromotorischem Fahrbetrieb; und
Fig. 4 eine Abwandlung der Fig. 3 zur Durchführung eines erfindungsgemäßen Synchronpunkt-Ermittlungsverfahrens.

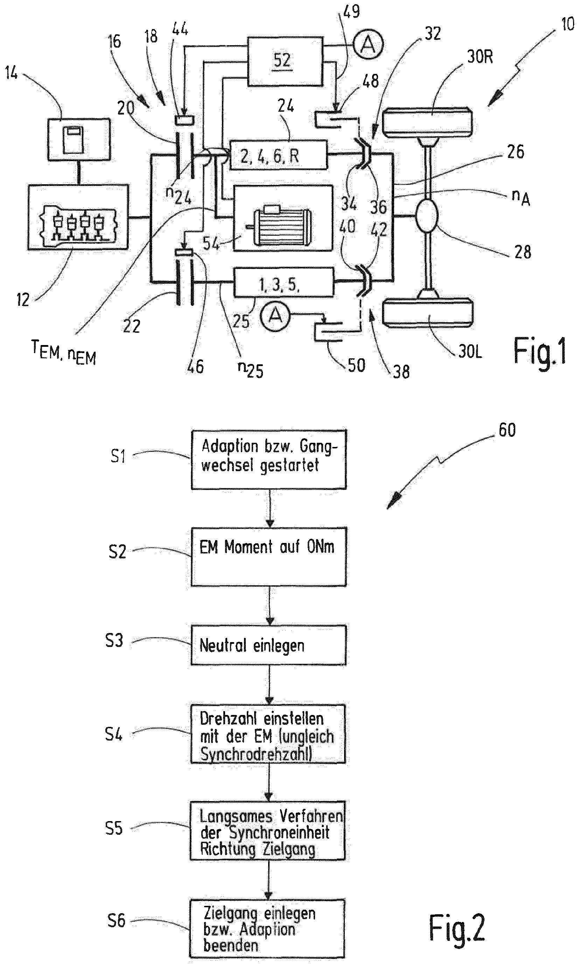

In Fig. 1 ist in schematischer Form ein Antriebsstrang für ein Kraftfahrzeug dargestellt und generell mit 10 bezeichnet.

Der Antriebsstrang 10 beinhaltet einen Verbrennungsmotor 12, der mit Kraftstoff aus einem Tank 14 versorgt wird. Ferner weist der Antriebsstrang 10 ein Doppelkupplungsgetriebe 16 auf. Das Doppelkupplungsgetriebe 16 beinhaltet eine Doppelkupplungsanordnung 18 mit einer ersten Reibkupplung 20 und einer zweiten Reibkupplung 22. Die Eingangsglieder der ersten und der zweiten Reibkupplung 20, 22 sind mit dem Verbrennungsmotor 12 verbunden. Ein Ausgangsglied der ersten Reibkupplung 20 ist mit einem ersten Teilgetriebe 24 des Doppelkupplungsgetriebes 16 verbunden, das den geraden Gangstufen 2, 4, 6 und der Rückwärtsgangstufe zugeordnet ist. Ein Ausgangsglied der zweiten Reibkupplung 22 ist mit einem zweiten Teilgetriebe 25 des Doppelkupplungsgetriebes 16 verbunden, wobei dem zweiten Teilgetriebe 25 die ungeraden Gangstufen 1, 3, 5 zugeordnet ist. Die zwei Teilgetriebe 24, 25 sind mit einem Ausgang 26 (Ausgangswelle oder Ausgangsradsatz) verbunden, über den ein Differential 28 angetrieben wird. Das Differential 28 dient dazu, Antriebsleistung auf angetriebene Räder 30L, 30R zu verteilen.

Das erste Teilgetriebe 24 weist eine Mehrzahl von Synchron-Schaltkupplungen auf, von denen eine in Fig. 1 schematisch dargestellt ist. Jede Synchron-Schaltkupplung 32 weist ein Antriebsglied 34 und ein Abtriebsglied 36 auf. Das Antriebsglied 34 kann bspw. mit einer Welle des ersten Teilgetriebes 24 verbunden sein. Das Abtriebsglied 36 kann bspw. ein an der Welle gelagertes Losrad sein, das Teil eines Radsatzes zum Einrichten einer Gangstufe ist. Das Antriebsglied 34 kann ein mit der Welle verbundenes Glied sein, wie bspw. eine Führungsmuffe. Das Abtriebsglied 36 kann ein mit dem Losrad verbundenes Glied sein, wie bspw. ein Kupplungskörper.

Das zweite Teilgetriebe 25 weist in entsprechender Weise eine Mehrzahl von zweiten Synchron-Schaltkupplungen 38 auf, die jeweils ein Antriebsglied 40 und ein Abtriebsglied 42 aufweisen.

Die erste Reibkupplung 20 der Doppelkupplungsanordnung 18 ist mittels eines ersten Reibkupplungsaktuators 44 betätigbar, der bspw. als hydraulischer Aktuator oder als elektromechanischer Aktuator ausgebildet sein kann. In entsprechender Weise ist die zweite Reibkupplung 22 mittels eines zweiten Reibkupplungsaktuators 46 betätigbar, der hydraulisch oder elektromechanisch ausgebildet sein kann.

Zur Betätigung einer Synchron-Schaltkupplung 32 des ersten Teilgetriebes 24 dient ein erster Schaltkupplungsaktuator 48, der ebenfalls hydraulisch oder elektromechanisch ausgebildet sein kann. In Fig. 1 ist dargestellt, dass dem ersten Schaltkupplungsaktuator 48 Leistung 49 zugeführt wird, um für eine Betätigung der zugeordneten Synchron-Schaltkupplung 32 zu sorgen.

Die Synchron-Schaltkupplungen 32 des ersten Teilgetriebes können zu Synchron-Schaltkupplungspaketen zusammengefasst sein, wobei jedem Schaltkupplungspaket ein Schaltkupplungsaktuator 48 zugeordnet ist.

In entsprechender Weise können die zweiten Synchron-Schaltkupplungen 38 des zweiten Teilgetriebes 25 zu solchen Schaltkupplungspaketen zusammengefasst sein, die mittels jeweiliger zweiter Schaltkupplungsaktuatoren 50 betätigbar sind.

Wie es in Fig. 1 schematisch angedeutet ist, sind die Reibkupplungsaktuatoren 44, 46 und die Schaltkupplungsaktuatoren 48, 50 mit einer Steuereinrichtung 52 verbunden, die die jeweiligen Aktoren in geeigneter Art und Weise ansteuert und/oder mit Leistung versorgt.

Der Antriebsstrang 10 beinhaltet ferner eine elektrische Maschine 54, die an das erste Teilgetriebe 24 angeschlossen ist, und zwar an dessen Getriebeeingangsseite. Dies bedeutet, dass die elektrische Maschine 54 entweder an eine Getriebeeingangswelle des ersten Teilgetriebes 24 angeschlossen ist, oder an einen Radsatz des ersten Teilgetriebes 24. Die Anbindung kann bspw. über einen Stirnradsatz erfolgen, was in Fig. 1 jedoch nicht dargestellt ist.

Die elektrische Maschine 54 wird ebenfalls von der Steuereinrichtung 52 angesteuert.

Der Antriebsstrang 10 ist ein Hybrid-Antriebstrang. Der Hybrid-Antriebstrang kann einen reinen verbrennungsmotorischen Betrieb einrichten, bei dem die elektrische Maschine 54 leer läuft. Hierbei kann der Verbrennungsmotor 12 als alleiniger Antriebsmotor verwendet werden, wobei das Doppelkupplungsgetriebe 16 in an sich bekannter Weise dafür sorgt, dass Gangwechsel zugunterbrechungsfrei durchgeführt werden können.

In einem Hybrid-Antriebsmodus kann Antriebsleistung sowohl von dem Verbrennungsmotor 12 als auch von der elektrischen Maschine 54 bereitgestellt werden. Die elektrische Maschine 54 kann in dem Hybrid-Antriebsmodus auch rekuperierend betrieben werden.

Ferner ist ein rein elektromotorischer Betrieb möglich, bei dem Antriebsleistung ausschließlich von der elektrischen Maschine 54 bereitgestellt und über das erste Teilgetriebe 24 auf den Ausgang 26 geführt wird. Im rein elektromotorischen Fahrmodus können Gangwechsel innerhalb des ersten Teilgetriebes 24 nur mit Zugkraftunterbrechung durchgeführt werden.

Da die Synchron-Schaltkupplungen 32, 38 der zwei Teilgetriebe 24, 25 jeweils mittels geeigneter Schaltkupplungsaktuatoren 48, 50 betätigt werden, ist es vorteilhaft, wenn die Steuereinrichtung 52 dazu in der Lage ist, einen sog. Synchronpunkt der jeweiligen Synchron-Schaltkupplungen anzufahren. Der Synchronpunkt einer Synchron-Schaltkupplung ist definiert durch einen Zustand, bei dem die Synchron-Schaltkupplung dazu in der Lage ist, ein geringes Drehmoment zu übertragen. Synchron-Schaltkupplungen beinhalten in der Regel Reibkonusse, die bei der Betätigung zur Durchführung eines Synchronisierungsvorganges zwischen Antriebsglied und Abtriebsglied in Eingriff gelangen.

Zur Verbesserung der automatisierten Betätigung einer Synchron-Schaltkupplung ist es vorteilhaft, wenn die übergeordnete Steuereinrichtung 52 Kenntnis über den Synchronpunkt hat.

Die Ermittlung des Synchronpunktes kann in dem zweiten Teilgetriebe 25 bspw. dadurch erfolgen, dass die Drehzahlen von Antriebsglied 40 und Abtriebsglied 42 überwacht werden und während einer allmählichen Betätigung einer Synchron-Schaltkupplungen 38 der Gradient von einer der Drehzahlen überwacht wird. Denn bei dem Erreichen des Synchronpunktes erfolgt in der Regel eine relativ schnelle Änderung der Drehzahl von einer der Wellen aufgrund des Widerstandsmomentes, das sich aufgrund des dabei entstehenden Reibeingriffes aufbaut.

In dem ersten Teilgetriebe 24 können derartige Ermittlungen des Synchronpunktes ggf. aufgrund der Trägheit der an das erste Teilgetriebe 24 angeschlossenen elektrischen Maschine 54 beeinträchtigt werden.

Demzufolge werden die Synchronpunkte der Synchron-Schaltkupplungen 32 des ersten Teilgetriebes 24 vorzugsweise aufgrund eines Verfahrens ermittelt, das in Fig. 2 schematisch bei 60 dargestellt ist und folgende Schritte beinhaltet.

In einem ersten Schritt S1 wird ein Gangwechsel in dem ersten Teilgetriebe 24 eingeleitet oder es wird eine Adaption gestartet. Das Starten einer Adaption bedeutet vorzugsweise, dass das erste Teilgetriebe 24 inaktiv ist und über das Doppelkupplungsgetriebe 16 gar keine Antriebsleistung übertragen wird oder aber Leistung ausschließlich über das zweite Teilgetriebe 25 übertragen wird. In diesem Fall kann eine Ermittlung des Synchronpunktes von einer Synchron-Schaltkupplung in dem dann inaktiven ersten Teilgetriebe 24 erfolgen. Alternativ kann dies erfolgen, während ein Gangwechsel in dem ersten Teilgetriebe 24 durchgeführt wird.

Nach dem Start im Schritt S1 wird zunächst das Moment der elektrischen Maschine 54 auf Null verringert. Anschließend werden in dem ersten Teilgetriebe 24 sämtliche Synchron-Schaltkupplungen auf Neutral geschaltet, also in ihre jeweilige Öffnungsposition gebracht (Schritt S3).

In einem darauffolgenden Schritt S4 wird die Drehzahl der elektrischen Maschine auf eine Synchronpunktermittlungsdrehzahl eingestellt, die ungleich einer Synchrondrehzahl, also ungleich einer Abtriebsdrehzahl ist. Die Abtriebsdrehzahl kann bspw. Null sein, wenn das Fahrzeug steht, kann jedoch auch eine bestimmte Drehzahl sein, die ungleich Null ist, wenn das Fahrzeug fährt.

Eine Synchron-Schaltkupplung ist vorzugsweise mit einer sog. Sperr-Synchronisierung ausgestattet. Dies bedeutet, dass ein Herstellen eines Formschlusses in der Synchron-Schaltkupplung nur dann möglich ist, wenn die Drehzahlen von Antriebsglied und Abtriebsglied im Wesentlichen gleich groß sind. Dies wird in der Regel durch einen Sperrring erreicht, der gegenüber einer Führungsmuffe in Umfangsrichtung begrenzt umschlagen kann, um ein Verschieben einer Schaltmuffe zu verhindern, wenn die Drehzahlen nicht angeglichen sind.

Durch das Einstellen der Drehzahl der elektrischen Maschine 54 auf eine solche Drehzahl, dass eine Antriebsglieddrehzahl der betroffenen Synchron-Schaltkupplung 32 ungleich der Abtriebsdrehzahl des Abtriebsgliedes 36 dieser Synchron-Schaltkupplung 32 ist, kann diese Synchron-Schaltkupplung 32 betätigt werden, ohne dass Gefahr besteht, dass mit dieser Synchron-Schaltkupplung 32 ein Formschluss hergestellt und folglich eine Gangstufe eingelegt wird.

Die Synchronpunktermittlungsdrehzahl wird dabei geregelt. Die elektrische Maschine 54 kann entweder auf eine bestimmte Drehzahl geregelt werden oder kann auf ein bestimmtes Drehmoment eingestellt werden. Das Einstellen der Synchronpunktermittlungsdrehzahl erfolgt vorzugsweise durch Regeln dieser Drehzahl.

Sobald die Synchronpunktermittlungsdrehzahl eingeschwungen ist, wird der Schritt S5 eingeleitet, bei dem der zugeordnete Schaltkupplungsaktuator 48 so angesteuert wird, dass die Synchron-Schaltkupplung 32 langsam aus ihrer Öffnungsposition in Richtung der Schließposition verfahren wird, also in Richtung Zielgang.

Während des Schrittes S5 wird ein Betriebsparameter überwacht, anhand dessen sich feststellen lässt, ob der Synchronpunkt erreicht ist. Dies kann dadurch festgestellt werden, wenn sich der Betriebsparameter absolut verändert, wenn er sich relativ zu einem Betriebsparametervergleichswert verändert und/oder wenn er sich dynamisch verändert, bspw. durch Beobachtung seiner ersten oder zweiten Ableitung.

Vorliegend kann der Betriebsparameter eine Leistungsaufnahme 49 des Schaltkupplungsaktuators 48 sein, bspw. eine Stromaufnahme eines Schaltwalzenmotors, anhand dessen sich Rückschlüsse auf die wirkende Kraft ergeben. Denn wenn der Synchronpunkt erreicht ist, baut sich in der Synchron-Schaltkupplung ein Reibmoment auf, das von der Ansteuerung des Schaltkupplungsaktuators 48 als Widerstand erfahren wird, so dass zum fortgesetzten Betätigen der Synchron-Schaltkupplung in Richtung der Schließposition eine höhere Kraft notwendig ist und folglich eine höhere Leistung.

Zusätzlich ist es möglich, als Betriebsparameter einen Drehzahlgradienten zu überwachen. Sobald der Synchronpunkt erreicht ist, wird die Drehzahl der elektrischen Maschine ggf. etwas absinken, was dann anschließend durch die Regelung ausgeglichen wird. Diese Drehzahländerung stellt einen Gradienten dar, der zur Ermittlung des Synchronpunktes herangezogen werden kann.

Erfindungsgemäß ergibt sich, dass man ein von der elektrischen Maschine bereit gestelltes Drehmoment überwacht. Da bei Auftreten des Synchronpunktes aufgrund des Reibeingriffes sich ein Widerstandsmoment ergibt, muss die elektrische Maschine 54 zum Aufrechterhalten der Synchronpunktermittlungsdrehzahl ein höheres Drehmoment aufbringen, was wiederum von der Steuereinrichtung erfasst werden kann, um den Synchronpunkt auf diese Weise zu erfassen.

Die Synchronpunktermittlungsdrehzahl des Antriebsgliedes 34 wird vorzugsweise so gewählt, dass die Differenz zu der Abtriebsdrehzahl des Abtriebsgliedes in einem Bereich von 50 U/min bis 500 U/min liegt, insbesondere in einem Bereich von 150 U/min bis 350 U/min, vorzugsweise in einem Bereich von 200 U/min bis 300 U/min.

Die Synchronpunktermittlungsdrehzahl kann entweder größer sein als die Abtriebsdrehzahl oder kann kleiner sein. Dies kann vorteilhafterweise in Abhängigkeit davon eingestellt werden, ob sich das Kraftfahrzeuggetriebe in einem Zugbetrieb oder an einem Schubbetrieb befindet.

Erfindungsgemäß ist es auch möglich, das von der elektrischen Maschine bereit gestellte Drehmoment auf ein Synchronpunkt-Ermittlungsdrehmoment zu regeln und anschließend den zugeordneten Schaltkupplungsaktuator anzusteuern, um die Synchron-Schaltkupplung 32 aus der Öffnungsposition in Richtung der Schließposition zu betätigen, wobei der Synchronpunkt ermittelt wird, in dem wenigstens ein Betriebsparameter wie bspw. eine Drehzahl einer Getriebeeingangswelle überwacht wird.

In einem Schritt S6 wird die Adaption beendet oder die Zielgangstufe eingelegt.

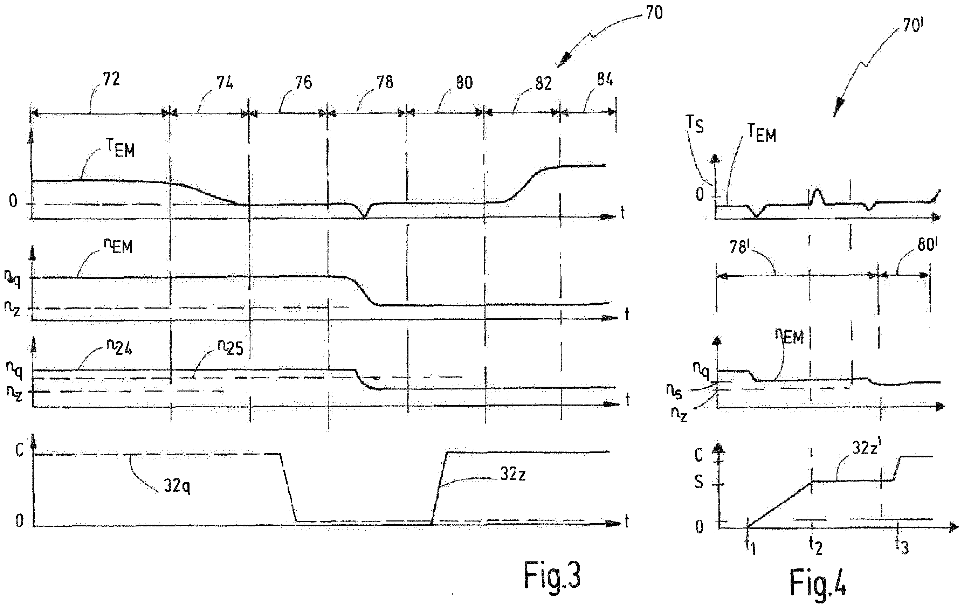

In Fig. 3 ist ein Zeitablaufdiagramm 70 dargestellt, das den Zeitablauf bei einer Gangschaltung in dem ersten Teilgetriebe 24 bei einem rein elektromotorischen Fahrbetrieb darstellt. Der Ablauf unterteilt sich in eine Mehrzahl von Phasen 72 bis 84.

In Fig. 3 sind mehrere Ablaufdiagramme dargestellt. Das oberste Diagramm betrifft das von der elektrischen Maschine 54 bereit gestellte Drehmoment T_{EM}.

Das darunterliegende Diagramm zeigt die von der elektrischen Maschine 54 bereit gestellte Drehzahl n_{EM} bzw. eine Drehzahl proportional hierzu. In dem darunterliegenden Diagramm sind die Drehzahlen n₂₄ und n₂₅ der Eingangswellen der zwei Teilgetriebe 24, 25 dargestellt. In dem untersten Diagramm sind die Zustände von Synchron-Schaltkupplungen 32_{q}, 32_{z} eines Quellganges und eines Zielganges dargestellt.

In der ersten Phase 72 stellt die elektrische Maschine 54 ein Drehmoment T_{EM} bereit, so dass sich eine Drehzahl n_{EM} ergibt, wobei die Drehzahl bspw. über einen Stirnradsatz in eine Drehzahl n₂₄ einer Getriebeeingangswelle übersetzt wird. Die Drehzahlen sind in den Drehzahldiagrammen auch mit n_{q} bezeichnet, da sie den Quellgang reflektieren. Die Drehzahl n₂₅ des anderen Teilgetriebes kann konstant sein und kann entweder Null sein oder kann proportional zu der Abtriebsdrehzahl n_{A} des Abtriebes (siehe Fig. 1) sein.

Im untersten Diagramm ist dargestellt, dass eine Synchron-Schaltkupplung 32q eines Quellganges sich in einem geschlossenen Zustand C (closed) befindet.

In einer darauffolgenden Phase 74 wird zunächst das Drehmoment T_{EM} der elektrischen Maschine auf Null verringert. Aufgrund der Trägheit bleibt dabei die Drehzahl n_{EM} im Wesentlichen konstant. In der darauffolgenden Phase 76 wird die Synchron-Schaltkupplung 32q der Quellgangstufe geöffnet (32q = O (open)). In der darauffolgenden Phase 78 erfolgt durch Beeinflussung des Drehmoment T_{EM}, das ggf. negativ sein kann, eine Beeinflussung der Drehzahl n_{EM} der elektrischen Maschine, so dass deren Drehzahl auf eine Drehzahl n_{z} abgesenkt wird, die an die Zielgangstufe angepasst ist. In entsprechender Weise ändert sich die Drehzahl n₂₄ von einer Drehzahl n_{q} auf n_{z}.

Anschließend wird das Drehmoment T_{EM} wieder auf Null gestellt (am Ende der Phase 78), so dass in der darauffolgenden Phase 80 die Synchron-Schaltkupplung 32z der Zielgangstufe geschlossen werden kann. Wenn nach Ablauf der Phase 80 sich die Synchron-Schaltkupplung 32z in der Schließposition befindet (C), kann in der darauffolgenden Phase 82 das Drehmoment T_{EM} wieder erhöht werden, um Antriebsleistung bereitzustellen. Die letzte Phase 84 betrifft wieder einen herkömmlichen Betrieb mittels der elektrischen Maschine 54 unter Verwendung der Zielgangstufe.

Sofern in dem ersten Teilgetriebe 24 eine Synchron-Ermittlung zum Zwecke einer Adaption eines Synchronpunkt-Stellwertes in der Steuereinrichtung 52 durchgeführt werden soll, so kann dies entweder dann erfolgen, wenn das erste Teilgetriebe 24 inaktiv ist. In diesem Fall kann das Verfahren gemäß Fig. 2 angewendet werden.

Eine Ermittlung des Synchronpunktes kann jedoch auch bei einer herkömmlichen Gangschaltung in eine Zielgangstufe erfolgen. Hierbei erfolgen die Phasen 72 bis 76 auf die gleiche Art und Weise wie es in Fig. 3 dargestellt ist.

Fig. 4 zeigt ein Zeitablaufdiagramm 70', bei dem die Phasen 78' und 80' abgewandelt sind, um die Synchronpunkt-Ermittlung durchzuführen.

So erfolgt in der Phase 78' zunächst eine Änderung des Drehmoment T_{EM}, um die Drehzahl n_{EM} auf eine Synchronpunktermittlungsdrehzahl nₛ einzustellen. Die Synchronpunktermittlungsdrehzahl nₛ führt zu einer Antriebsdrehzahl des Antriebsgliedes 34, die um eine Drehzahldifferenz unterschiedlich ist gegenüber einer Abtriebsdrehzahl n_{A} des Abtriebsgliedes 36. Dies erfolgt zu einem Zeitpunkt t₁, wobei im Anschluss hieran die Synchron-Schaltkupplung 32 langsam in Richtung der Schließposition C bewegt wird. Zu einem Zeitpunkt t₂ ist dabei ein Synchronpunkt S der betroffenen Synchron-Schaltkupplung 32 erreicht. Da die Drehzahl n_{EM} geregelt wird, führt das Erreichen des Synchronpunktes S zu dem Auftreten eines Widerstandsmomentes, so dass sich zu dem Zeitpunkt t₂ das Drehmoment T_{EM} ändert (und/oder eine Leistungsaufnahme 49 eines Schaltkupplungsaktuators 48 ändert).

Nach der Ermittlung des Synchronpunktes kann dann im Anschluss die Drehzahl n_{EM}, ähnlich wie bei dem Verfahren der Fig. 3, auf die Drehzahl n_{z} der Zielgangstufe eingestellt werden (t₃), so dass dann in der darauffolgenden Phase 80' wie auch bei dem Verfahren der Fig. 3 die Synchron-Schaltkupplung 32z der Zielgangstufe in die Schließposition C bewegt werden kann. Die übrigen Schritte des Gangwechsels sind ansonsten identisch zu dem in Fig. 3 gezeigten Verfahren.

## Patentansprüche

1. Verfahren zum Ermitteln eines Synchronpunktes (S) einer Synchron-Schaltkupplung (32) eines Kraftfahrzeuggetriebes (24), das eingangsseitig mit einer elektrischen Maschine (54) verbunden ist und das eine Mehrzahl von Synchron-Schaltkupplungen (32) beinhaltet, die jeweils ein mit der elektrischen Maschine (54) verbundenes Antriebsglied (34) und ein mit einer Ausgangswelle (26) verbundenes Abtriebsglied (36) aufweisen, und die mittels eines zugeordneten Schaltkupplungsaktuators (48) aus einer Öffnungsposition (O) in eine Schließposition (C) betätigbar sind, mit den folgenden Schritten:
- Erfassen einer Abtriebsdrehzahl (n_{A}) des Abtriebsgliedes (36) von einer Synchron-Schaltkupplung (32), deren Synchronpunkt (S) zu ermitteln ist;
- Regeln einer Antriebsdrehzahl (n₂₄) des Antriebsgliedes (34) der Synchron-Schaltkupplung (32) auf eine Synchronpunktermittlungsdrehzahl (n_{S}), die ungleich der Abtriebsdrehzahl (n_{A}) ist;
- Ansteuern des Schaltkupplungsaktuators (48), um die Synchron-Schaltkupplung (32) aus der Öffnungsposition (O) in Richtung der Schließposition (C) zu betätigen; und
- Ermitteln des Synchronpunktes (S) der Synchron-Schaltkupplung (32), indem wenigstens ein Betriebsparameter (T_{EM}; 49) überwacht wird, wobei der Synchronpunkt (S) festgestellt wird, wenn der Betriebsparameter (T_{EM}; 49) sich absolut verändert, sich relativ zu einem Betriebsparametervergleichswert verändert und/oder sich dynamisch verändert, wobei der Betriebsparameter das von der elektrischen Maschine (54) bereit gestellte Drehmoment (T_{EM}) oder eine von dem Schaltkupplungsaktuator (48) aufgenommene Leistung (49) ist.

2. Verfahren nach Anspruch 1, wobei der Schritt des Ansteuerns des Schaltkupplungsaktuators (48) zur Betätigung der Synchron-Schaltkupplung (32) eingeleitet wird, sobald die Regelung der Synchronpunktermittlungsdrehzahl (n_{S}) eingeschwungen ist.

3. Verfahren nach einem der Ansprüche 1 - 2, wobei die Abtriebsdrehzahl (n_{A}) gleich Null ist.

4. Verfahren nach einem der Ansprüche 1 - 2, wobei die Abtriebsdrehzahl (n_{A}) ungleich Null ist.

5. Verfahren nach einem der Ansprüche 1 - 4, wobei die Antriebsdrehzahl (n₂₄) in Abhängigkeit davon, ob sich das Kraftfahrzeuggetriebe (24) in einem Zugbetrieb oder in einem Schubbetrieb befindet, auf eine Synchronpunktermittlungsdrehzahl (n_{S}) größer oder kleiner als die Abtriebsdrehzahl (n_{A}) geregelt wird.

6. Verfahren nach einem der Ansprüche 1 - 5, wobei eine aufgrund der Regelung der Antriebsdrehzahl (n₂₄) auf die Synchronpunktermittlungsdrehzahl (n_{S}) eingerichtete Drehzahldifferenz zwischen der Synchronpunktermittlungsdrehzahl (n_{S}) und der Abtriebsdrehzahl (n_{A}) in einem Bereich von 50 U/min bis 500 U/min liegt, insbesondere in einem Bereich von 150 U/min bis 350 U/min.

7. Verfahren nach einem der Ansprüche 1 - 6, wobei die Antriebsdrehzahl (n₂₄) mittels der elektrischen Maschine (54) geregelt wird.

8. Kraftfahrzeuggetriebe mit einer Eingangswelle, mit einer Mehrzahl von Radsätzen (2, 4, 6, R), denen eine Mehrzahl von Synchron-Schaltkupplungen (32) zugeordnet ist, mit einer Ausgangswelle (26), mit einer elektrischen Maschine (54), die mit der Eingangswelle verbunden ist, wobei die Synchron-Schaltkupplungen (32) jeweils ein mit der Eingangswelle verbundenes Antriebsglied (34) und ein mit der Ausgangswelle (26) verbundenes Abtriebsglied (36) aufweisen und wobei die Synchron-Schaltkupplungen (32) mittels wenigstens einem zugeordneten Schaltkupplungsaktuator (48) aus einer Öffnungsposition (O) in eine Schließposition (C) betätigbar sind, und mit einer Steuereinrichtung (52) zur Ansteuerung der elektrischen Maschine (54) und des Schaltkupplungsaktuators (48),
**dadurch gekennzeichnet, dass** die Steuereinrichtung (52) dazu ausgebildet und eingerichtet ist, um das Verfahren nach einem der Ansprüche 1 - 7 durchzuführen.

## Claims

1. Method for determining a synchronous point (S) of a synchronizing clutch (32) of a motor vehicle transmission (24) which is connected on the input side to an electric machine (54) and which contains a multiplicity of synchronizing clutches (32) which each have a drive element (34) which is connected to the electric machine (54) and an output element (36) which is connected to an output shaft (26), and which can be activated out of an open position (O) into a closed position (C) by means of an assigned clutch actuator (48), comprising the following steps:
- detecting an output rotational speed (n_{A}) of the output element (36) of a synchronizing clutch (32) whose synchronous point (S) is to be determined;
- adjusting a drive rotational speed (n₂₄) of the drive element (34) of the synchronizing clutch (32) to a synchronous point-determining rotational speed (n_{S}) which is unequal to the output rotational speed (n_{A});
- actuating the clutch actuator (48), in order to activate the synchronizing clutch (32) from the open position (O) in the direction of the closed position (C); and
- determining the synchronous point (S) of the synchronizing clutch (32) by monitoring at least one operating parameter (T_{EM}; 49), wherein the synchronous point (S) is ascertained when the operating parameter (T_{EM}; 49) changes absolutely, changes relative to an operating parameter comparison value and/or changes dynamically, wherein the operating parameter is the torque (T_{EM}) which is provided by the electric machine (54) or a power level (49) which is taken up by the clutch actuator (48).

2. Method according to Claim 1, wherein the step of actuating the clutch actuator (48) is initiated in order to activate the synchronizing clutch (32) as soon as the adjustment of the synchronous point-determining rotational speed (n_{S}) has settled.

3. Method according to one of Claims 1-2, wherein the output rotational speed (n_{A}) is equal to zero.

4. Method according to one of Claims 1-2, wherein the output rotational speed (n_{A}) is unequal to zero.

5. Method according to one of Claims 1-4, wherein the drive rotational speed (n₂₄) is adjusted, in accordance with whether the motor vehicle transmission (24) is in a traction mode or in an overrun mode, to a synchronous point-determining rotational speed (n_{S}) which is higher than or lower than the output rotational speed (n_{A}).

6. Method according to one of Claims 1-5, wherein a difference in rotational speed, configured on the basis of the adjustment of the drive rotational speed (n₂₄) to the synchronous point-determining rotational speed (n_{S}), between the synchronous point-determining rotational speed (n_{S}) and the output rotational speed (n_{A}) lies in a range from 50 rpm to 500 rpm, in particular in a range from 150 rpm to 350 rpm.

7. Method according to one of Claims 1-6, wherein the drive rotational speed (n₂₄) is adjusted by means of the electric machine (54).

8. Motor vehicle transmission with an input shaft, with a multiplicity of wheel sets (2, 4, 6, R) which are assigned a multiplicity of synchronizing clutches (32), with an output shaft (26), with an electric machine (54) which is connected to the input shaft, wherein the synchronizing clutches (32) each have a drive element (34) which is connected to the input shaft and an output element (36) which is connected to the output shaft (26) and wherein the synchronizing clutches (32) can be activated from an open position (O) into a closed position (C) by means of at least one assigned clutch actuator (48), and with a control device (52) for actuating the electric machine (54) and the clutch actuator (48),
**characterized in that** the control device (52) is designed and configured to carry out the method according to one of Claims 1-7.

## Revendications

1. Procédé de détermination d'un point de synchronisation (S) d'un embrayage synchrone (32) d'une boîte de vitesses de véhicule automobile (24) qui est reliée côté entrée à une machine électrique (54) et qui comporte une pluralité d'embrayages synchrones (32) qui présentent respectivement un élément d'entraînement (34) relié à la machine électrique (54) et un élément entraîné (36) relié à un arbre de sortie (26), et qui peuvent être actionnés au moyen d'un actionneur d'embrayage associé (48) d'une position d'ouverture (O) à une position de fermeture (C), comprenant les étapes suivantes consistant à :
- détecter une vitesse de rotation de sortie (n_{A}) de l'élément entraîné (36) à partir d'un embrayage synchrone (32) dont le point de synchronisation (S) doit être déterminé ;
- réguler une vitesse de rotation d'entraînement (n₂₄) de l'élément d'entraînement (34) de l'embrayage synchrone (32) sur une vitesse de rotation de détermination de point de synchronisation (n_{S}) qui est différente de la vitesse de rotation de sortie (n_{A}) ;
- piloter l'actionneur d'embrayage (48) pour actionner l'embrayage synchrone (32) de la position d'ouverture (O) en direction de la position de fermeture (C) ; et
- déterminer le point de synchronisation (S) de l'embrayage synchrone (32) en surveillant au moins un paramètre de fonctionnement (T_{EM} ; 49), le point de synchronisation (S) étant déterminé lorsque le paramètre de fonctionnement (T_{EM} ; 49) varie de façon absolue, varie par rapport à une valeur de comparaison de paramètre de fonctionnement, et/ou varie de façon dynamique, le paramètre de fonctionnement étant le couple (T_{EM}) fourni par la machine électrique (54) ou une puissance absorbée (49) par l'actionneur d'embrayage (48).

2. Procédé selon la revendication 1, dans lequel l'étape de pilotage de l'actionneur d'embrayage (48) pour actionner l'embrayage synchrone (32) est lancée dès que la régulation de la vitesse de rotation de détermination de point de synchronisation (n_{S}) s'est stabilisée.

3. Procédé selon l'une quelconque des revendications 1 à 2, dans lequel la vitesse de rotation de sortie (n_{A}) est égale à zéro.

4. Procédé selon l'une quelconque des revendications 1 à 2, dans lequel la vitesse de rotation de sortie (n_{A}) est différente de zéro.

5. Procédé selon l'une quelconque des revendications 1 à 4, dans lequel la vitesse de rotation d'entraînement (n₂₄) est régulée sur une vitesse de rotation de détermination de point de synchronisation (n_{S}) supérieure ou inférieure à la vitesse de rotation de sortie (n_{A}), en fonction du fait que la boîte de vitesses de véhicule automobile (24) se trouve en mode traction ou en mode poussée.

6. Procédé selon l'une quelconque des revendications 1 à 5, dans lequel une différence de vitesse de rotation entre la vitesse de rotation de point de synchronisation (n_{S}) et la vitesse de rotation de sortie (n_{A}), établie en raison de la régulation de la vitesse de rotation d'entraînement (n₂₄) et régulée sur la vitesse de rotation de détermination de point de synchronisation (n_{S}), se trouve dans une plage de 50 tr/min à 500 tr/min, en particulier dans une plage de 150 tr/min à 350 tr/min.

7. Procédé selon l'une quelconque des revendications 1 à 6, dans lequel la vitesse de rotation d'entraînement (n₂₄) est régulée au moyen de la machine électrique (54).

8. Boîte de vitesses de véhicule automobile comprenant un arbre d'entrée, une pluralité de trains de roues (2, 4, 6, R) à laquelle est associée une pluralité d'embrayages synchrones (32), un arbre de sortie (26), une machine électrique (54) qui est reliée à l'arbre d'entrée, les embrayages synchrones (32) présentant respectivement un élément d'entraînement (34) relié à l'arbre d'entrée et un élément entraîné (36) relié à l'arbre de sortie (26), et dans lequel les embrayages synchrones (32) peuvent être actionnés au moyen d'au moins un actionneur d'embrayage associé (48) d'une position d'ouverture (O) à une position de fermeture (C), et un dispositif de commande (52) pour piloter la machine électrique (54) et l'actionneur d'embrayage (48),
**caractérisée en ce que** le dispositif de commande (52) est réalisé et aménagé pour effectuer le procédé selon l'une quelconque des revendications 1 à 7.
